# EUROPEAN PATENT SPECIFICATION

(11) **EP 4 361 578 B1**
(45) Date of publication and mention of the grant of the patent: **02.12.2026**
(21) Application number: 22203491.0
(22) Date of filing: 25.10.2022
(51) Int. Cl.: G01F 15/10

(54) **PREVENTING FROST DAMAGE OF FLOW METERS IN A DISTRIBUTION NETWORK**
VERHINDERUNG VON FROSTSCHÄDEN VON DURCHFLUSSMESSERN IN EINEM VERTEILUNGSNETZ
PRÉVENTION DES DOMMAGES CAUSÉS PAR LE GEL DE DÉBITMÈTRES DANS UN RÉSEAU DE DISTRIBUTION

(43) Date of publication of application: 01.05.2024
(73) Proprietor: Kamstrup A/S, 8660 Skanderborg (DK)
(72) Inventor: Holmegaard, Lotte, DK-8660 Skanderborg (DK); Dupont, Sune Hoveroust, DK-8660 Skanderborg (DK); Raunbak, Mads, DK-8660 Skanderborg (DK); Poulsen, Morten Ørris, DK-8660 Skanderborg (DK); Rasmussen, Morten, DK-8660 Skanderborg (DK)
(74) Representative: Plougmann Vingtoft a/s

(56) References cited:
- CN-U- 215 811 056
- KR-A- 20120 056 436
- KR-B1- 102 116 121
- US-A1- 2022 309 907

## Description

### FIELD OF THE INVENTION

The present invention relates to the field of flow meters for measuring a consumed quantity of a fluid, e.g. water. More specifically, the invention relates to preventing frost damage of flow meters in a distribution network, such as flow meters placed in a pit or in a box above ground level.

### BACKGROUND OF THE INVENTION

Prevention of and solving problems with freeze or frost in pipes and flow meters is well known. The international patent classification IPC has dedicated particular classes for this, namely E03B7/10 and E03B7/12. Prior art teaches many ways to remove the effects of freezing, such as electrically heating up a wire around the object to be protected, or to integrate escape rooms into which an expanding ice can grow without destroying the pipe or the meter. Other solutions include a shutoff valve which closes when the liquid temperature in the pipe approaches freezing temperatures, hereby protecting to some extent the pipes and meters placed after the valve. Even further, some solutions ensure a continuous flow of liquid through the pipe or the meter by opening a small drain valve with the only intention to enable a liquid flow in the pipe so that the liquid will not freeze.

Other known solutions described are solutions which counteract and undoes the effects of an actual or impending freeze situation. Instead of acting at the time of freezing one can send a warning signal immediately prior to a freezing happening.

One protection strategy to avoid freezing of the flow meter is to insulate the flow meter by wrapping it with insulating material. Another solution is to place the flow meter inside a protecting box; the protecting box is typically placed at or just above the ground surface. A further frequently used solution is a pit installation, where the flow meter is placed inside the pit which is burried in the ground. The flow meter will in such a solution typically be between 20 centimeters to 1 meter below the surface and covered with a lid. A man-hole solution. In some situations the lid does not protect well against the frost and owners or end users of the flow meters may even manually protect the meters by placing further protective sheets over the meters or pit lids in case of upcoming frost. This is of course cumbersome.

During normal and intended operation the frost protection measures described above are adequate and protective, but sometimes unintended situations occur. Thus, the insulation wrapping may be damaged leaving the flow meter exposed to frost. Or the protective box is damaged and a crack or hole allows a frost bite attack. In the pit solution often the lid is damaged, or even removed by humans or blown away by wind, hereby leaving open the flow meter to the full destructive impact of frost.

An example of a solution is described in KR10-2019-0083851, where a smart metering-based temperature sensor is able to measure a temperature inside a waterworks protection tank (protective container) through said temperature sensor connected to the waterworks remote checking system and to detect and prevent the meter from freezing and bursting. The temperature sensor detects the temperature inside the protective container; and a wireless communication terminal transmits information about flow measured by the digital meter and the information about temperature detected by the temperature sensor to a relay placed outside of the protective container. The temperature sensor and wireless communication terminal are mounted inside the protective container. However, in the solution described in KR10-2019-0083851 it may be seen as a problem that detection of a low temperature may not allow any action to prevent damage, e.g. in case a protection or insulation box around the meter is damaged, or in case a lid of a pit is broken or missing.

KR 2012 0056436 A describes a system for a home aqua grid to prevent freezing and rupture of a water meter by monitoring the temperature of the water flowing inside the pipe and the outdoor temperature, and informing the user when there is a risk of freezing and rupture. The system includes smart water meters that measure the temperature of the water and communicate through a network, a meteorologic server that provides outdoor temperature information, and a management server that analyzes the temperature data to determine the risk of freezing and rupture.

Another example of a solution is described in US 2022/309907 A1, which describes a prediction method for predicting freezing of a liquid flowing in a pipe of a liquid meter, including evaluation of a prediction parameter representative of future variations of ambient air temperature.

### OBJECT OF THE INVENTION

It is an object of the present invention to solve the technical problem of flow meters placed outside of residential buildings, which in some geographical areas are exposed to frost with the risk that a pipe, a pipe connection or the flow meter housing is damaged.

The Applicant desires to improve the protection against frost damage to flow meters and especially to describe a solution to how to detect and warn if a flow meter is at risk of being damaged by frost. Especially, it is desired to describe a solution that allows sufficient time for actions to prevent frost damage.

### SUMMARY OF THE INVENTION

In a first aspect, the invention provides a method for preventing frost damage to one or more flow meters installed in a fluid distribution network containing a fluid according to appended claim 1.

The steps can be performed by the processing unit. The invention has the advantage that the frost damage candidates of a group of flow meters, e.g. water meters, can be detected early and well in time before the actual frost bites. Especially, it has been observed that it is possible to monitor temperatures during a no-frost period, and still this allows identification of frost damage candidates. It has been found that continuous monitoring of temperatures will allow detection of abnormal thermal conditions of a flow meter and thus also the possible abnormal condition that may cause the flow meter to be more vulnerable to frost damage. In the most advantageous embodiment the no-frost temperatures are monitored and measured during summer, and already at this time, i.e. before any frost is threatening, a warning signal can be sent to the utility company that a flow meter in a specific pit or in a protection box is at particular risk of being damaged by frost in the upcoming winther which may be 4 or 5 months away.

This gives the utility company the advantage of having plenty of time to resolve the matter and save the flow meter - e.g. by replacing a removed cover of a pit or repairing a damaged box around the flow meter. This helps saving costs for the utility company and/or the end user.

Furthermore, the invention is advantageous, since it can be implemented by minor modifications of existing smart reading flow meters, e.g. building a temperature sensor into the housing of existing smart reading meters which can utilize existing wireless reading facilities to transmit temperature data. On the receiver side, the necessary software solutions on the receiver side to implement data analysis and the warning signal transmission or initiating frost protection activities can be implemented, which allow the utility company to benefit from flow meters which can be saved from frost damage.

Apart from saving costs to replacement of damaged flow meters, the invention will allow saving of valuable drinking water, since a frost damage of a flow meter will normally cause water leakage.

In the following, preferred embodiments or features will be described.

The temperatures are preferably measured by the plurality of flow meters over a period of time during a no-frost period, e.g. during summer. This allows identification of frost damage candidates in due time to allow initiating measure to protect the frost damage candidates - e.g. to replace a pit lid, or the like.

In some embodiments, the method comprises continuously monitoring minimum and maximum temperatures measured for at least a group of the plurality of flow meters, such as monitoring minimum and maximum temperatures per day for each of the plurality of flow meters over a period of time. Especially, the method may comprise identifying a frost damage candidate as a flow meter exhibiting minimum and maximum temperatures deviating from its normal individual pattern when measured over a period of time. Especially, the method may comprise identifying a frost damage candidate as a flow meter exhibiting minimum and maximum temperatures deviating from the minimum and maximum temperatures of a group of flow meters when measured over a period of time. Especially, the method may comprise determining for each of the plurality of flow meters an averaged minimum temperature and an averaved maximum temperature in response to minimum temperatures and maximum temperatures observed over a period of time, such as a period of 5-20 days, such as period of 5-15 days, such as a period of 8-12 days.

'Continuously monitoring' should be understood as meaning multiple samplings of data values with a regular of irregular time interval between each two samplings.

In some embodiments, the data analysis only involves determining deviations from a normal temperature pattern by analyzing measured temperatures for a group of flow meters.

In some embodiments, the data analysis involves determining deviations from a normal temperature pattern by a combination of analyzing measured temperatures for a group of flow meters and analyzing measured temperatures separately for each individual flow meter.

In some embodiments, the method comprises monitoring a plurality of flow meters which are placed in geographical proximity of each other. By "proximity" may be understood as within 50-100 km² square kilometers, or within 1-50 km², or below 1 km². More specifically, the plurality of flow meters monitored may be positioned in the fluid distribution network in the same type of installation configuration, such as in a pit or in a box above ground level. By grouping the flow meters, especially after geographical proximity, it allows easier detecting of a deviating flow meter, since it can be assumed that all flow meters in the group are exposed to similar wheather and thus temperature conditions.

In some embodiments, the temperature measured by each of the plurality of flow meters is an inside air temperature of the flow meter. Especially, the temperature may be measured by a temperature sensor arranged inside a housing of the flow meter, more specifically such sensor may be a temperature sensor arranged inside a cavity of the housing where at least a part of a flow measurement circuit of the flow meter is arranged. It may be preferred that the temperature sensor is placed on a printed circuit board along with electronic components related to the flow meter function.

In some embodiments, a frost damage candidate is identified as a flow meter having a measured time series of temperatures which is dissimilar to corresponding time series of temperatures measured by a group of other ones of the plurality of flow meters according to the data analysis. More specifically, a frost damage candidate may be identified as a flow meter exhibiting temperature data outliers with respect to measured time series of temperatures during the period observed, e.g. a no-frost period.

In some embodiments, the data analysis may comprise statistical methods to calculate a value for each flow meter based on the measured time series of temperatures during the period observed, e.g. a no-frost period, and wherein a frost damage candicate is identified as a flow meter exhibiting a statistical value which differs by more than a preset threshold from the group of other ones of the flow meters. Especially, the data analysis may comprise calculating a mean or median of the temperature for a period of time, such as per day, measured during the period for a group of the plurality of flow meters, and wherein a distance measure is calculated, such as a Euclidian distance measure, between said mean or median for the group of flow meters and the measured temperature in the same period of time for each of the flow meters, so a to identify a frost damage candidate.

In some embodiments, the step of identifying a frost damage candidate may involve taking into account a measured fluid flow for each of the plurality of flow meters in the period, such as discarding temperature measurements for a flow meter if measured at a time where the flow meter has measured a fluid flow outside a predetermined interval. Specifically, the data analysis may comprise identifying one or more of the plurality of flow meters as frost damage candidates only if the one or more flow meters exhibits a statistical value differing by more than a preset threshold from the group of other ones of the flow meters over a period of time, such as over a plurality of days. In this way accidental differences for a short period of time for a flow meter are ignored, and only a more constant difference over a predetermined period of time is taken as a sign of an abnormal conditions indicating that the flow meter is a frost damage candidate.

In some embodiments, the data analysis may comprise calculating a correlation coefficient of temperatures measured by each of the plurality of flow meters in relation to temperatures measured in the same time period by other ones of the plurality of flow meters. In this way a measure of deviation can be determined based on a mathematical algorithm and a simple value or threshold can be setup for identifying a frost damage candidate. Especially, the method may involve temperatures measured in the same time period by all other ones of the plurality of flow meters being located in the same geographical area. Especially, a frost damage candidate is identified as a flow meter which essentially is not correlated with the temperature movements of the other flow meters, e.g. having a measured one or more temperatures during, e.g. the no-frost period, which result in a correlation coefficient which is numerically below a preset threshold value, such as a preset threshold value being numerically below 0.5, such as being numerically within 0.1-0.5, such as a preset threshold value being numerically below 0.25.

The data analysis may comprise calculating at least one metric selected from the group of: minimum temperature, maxmum temperature, Mean Square Error, Mean Absolute Percentage Error, and Dynamic Time Warping.

The flow meters may especially be water meters.

An improved detection of a frost damage candidate is obtained by including the strength of the radio signal in the analysis. The radio signal from the flow meter has to pass through the lid of the pit or through the walls of the box and will be attenuated during this passing. The processing unit monitors the signal strength over time and if it suddenly is increased this is an indication that the lid has been removed or the box has an opening. It is thus advantageous to detect and monitor the signal strength of the radio signal by the processing unit and to use the signal strength as a further parameter in the data analysis of the temperatures measured.

In a second aspect, the invention provides a system for monitoring a fluid distribution network which comprises pipes and a plurality of flow meters according to appended claim 13.

Especially, the warning signal is preferably generated in the no-frost period. Hereby, the utility company then has ample time (during Summer) to correct the fault detected, e.g. replacing a removed lid.

Especially, the flow meters may be arranged to transmit their respective positions, such as GPS positions, to the processing unit, and that the processing unit is arranged to group the flow meters into groups with neighbouring flow meters in response to their positions, and wherein the data analysis unit is arranged to perform the data analysis based on said groups of neighbouring flow meters. This has the advantage that the frost warning can be made more precise, because flow meters placed at a high altitude can be grouped together and not mixed with flow meters at at lower altitude. In this way flow meters having the same ambient conditions can be compared, thus allowing a more sensitive way of identifying a deviating flow meter.

The flow meters may be ultrasonic flow meters and the temperature measured is a temperature of the fluid calculated from transit-time measurements made by ultrasonic piezo transducers. Thus, the temperature measurement is actually an indirect temperature measurement. Hereby, the ultrasonic transducers of the flow meters can be utilized both for flow measurements as well as for temperature measurements to be part of the frost candidate identification.

The flow meters may be arranged to measure both an air temperature and a fluid temperature, such as measuring air temperature and fluid temperature simultaneously or nearly simultaneously. Especially, if fluid temperature is measured during no-flow and/or during flow conditions, it can be possible not only to identify single flow meter frost damage candidates, but distribution pipe frost candidates can be identified as well.

In some embodiments, the flow meters are ultrasonic flow meters and wherein the temperature measured is an internal flow meter temperature measured by a temperature sensor placed inside a housing of the flow meter. Especially, the temperature sensor may be placed on a printed circuit board inside the housing of the flow meter. It may be preferred to measure ambient air temperatures rather than fluid temperatures, since fluid temperature may be complicated due to the fluid sometimes being in no-flow conditions, while at other times there is flow, and sometimes, the flow meter may not even filled with fluid.

Preferably, the flow meters are arranged to transmit the measured temperature represented as data in wireless data packets along with data representing a measured fluid flow quantity.

The temperature database of the server may further include meteorological temperature data provided by a third party meteorological wheather data provider, and wherein the data analysis unit is arranged to analyse the temperatures of the plurality of flow meters from the no-frost period along with the meteorological temperature data. Such meteorological wheather data may be utilized in the data analysis to facilitate the identification of a frost damage candidate. The meteorological data will typically be fetched via an internet access to the data providers.

The fluid distribution network may especially be a water distribution network, and the flow meters may be water meters for measuring a consumed amount of water.

In a third aspect, the invention provides use of the method according to the first aspect for preventing frost damage on flow meters, such as water meters in a water distribution network.

Features and embodiments of the first, second and third aspects of the present invention may each be combined with each other. These and other aspects of the invention will be apparent from and elucidated with reference to the embodiments described hereinafter.

### BRIEF DESCRIPTION OF THE FIGURES

The present invention and in particular preferred embodiments thereof will now be disclosed in more detail with regard to the accompanying figures. The figures show ways of implementing the present invention and are not to be construed as being limiting to other possible embodiments falling within the scope of the attached claim set.

### DETAILED DESCRIPTION OF EMBODIMENTS

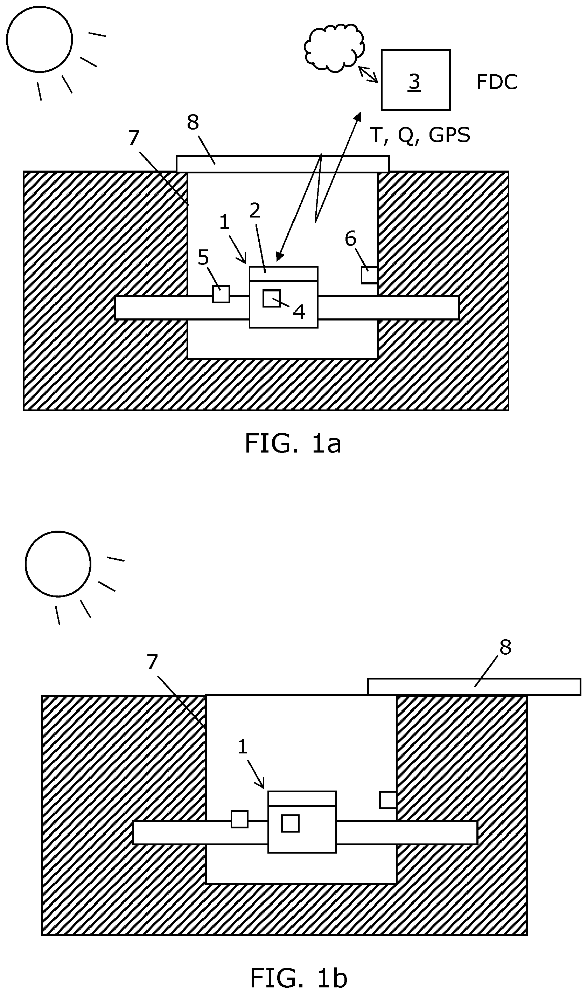

FIG. 1a and 1b show a flow meter 1 placed in a pit 7 in two different situations. In FIG. 1a, the flow meter 1 is placed in a pit 7 with a cover 8 serving to protect the pit 7 against dirt, rain, sun rays and frost, while in FIG. 1b the cover 8 is for some reason removed, and thus the pit 7 and thereby also the flow meter 1 is more directly exposed to dirt, rain, sun rays and frost. According to preferred embodiments of the invention, an air temperature is monitored in the pit, e.g. inside the flow meter 1, in a no-frost period, so as to determine if the cover 8 is fully or partly removed from the pit 7, and thereby exposing the flow meter 1 to frost in case of low temperature, i.e. thereby causing such flow meter 1 to be a frost damage candidate in a frost period. According to the invention, such frost damage candidate flow meter 1 can be identified already in a no-frost period, thus allowing early alarming and taking actions to e.g. replace the cover 8 in case it is misplaced or removed from the pit 7 before a period of frost, thereby preventing any damage of the frost damage candicate flow meter.

Preferably, the a frost damage candidate flow meter is identified by monitoring temperatures for a group of neighbouring flow meters 1 and performing data analysis on time series of such measured temperatures. The data analysis may involve various mathematical methods of identifying one or more flow meters 1 which exhibit temperatures considered as outliers from the group median or average, thereby indicating that such flow meters 1 could be a potential frost damage candidate, since the deviating temperature profile could be caused by the fact that the cover 8 is removed from the pit 7.

In order to obtain a robust condition monitoring without too many false positives the temperature data in a no-frost period from a group of a plurality of flow meters are monitored and a data analysis is preformed to determine any one or the flow meters which exhibit temperatures which can be considered as outliers or uncorrelated to the temperature profile for the group. The grouped of flow meters preferably comprises flow meters that can be considered as located under the same conditions, preferably located in the same geographical area, such as within an area of 1 km². Thus in a large network of flow meters covering a large geographical area, the flow meters are preferably grouped into a number of neighbouring groups.

The flow meter 1 is preferably a digital smart meter with a radio transmitter 2 enabled for wireless communication with a server 3 by means of a dedicated reading network such as a LoRA based network, wireless M-Bus and/or via Nb-IoT or 4G or 5G mobile network communication or the like. The flow meter 1 may further or alternatively be configured for wireless communication with a mobile receiver by drive by using a mobile receiver. A radio transmitter 2 transmits RF signals with information about temperature T, flow Q and/or global positioning GPS in the shown example via the cloud to a remote server 3.

The temperature sensor is preferably arranged inside the ultrasonic flow meter 1, i.e. it is preferably an internal temperature T sensor 4 placed inside a housing of the flow meter 1, e.g. placed on a printed circuit board. The flow meter further comprises two ultrasonic sensors used for measuring the transit time of flight between the two sensors. From the transit time the fluid flow rate Q through the pipe can be determined. In some embodiments, the ultrasonic sensors are also used to determine the temperature of the fluid, since the transit time is a function of the fluid temperature. This may additionally or alternatively be used as a measure of temperature to be transmitted for identifying frost damage candidates.

The most preferred solution is to use the sensor 4, i.e. a separate temperature sensor 4, which is mounted inside a housing of the flow meter 1, e.g. on the printed circuit board on which electronic components of the flow meter are arranged, already when manufacturing the flow meter. Such temperature sensor 4 inside the flow meter housing will be protected from physical damage, and it can be connected directly to the electronic components inside the flow meter 1, such as the radio transmitter 2, and it can be built into the flow meter 1 easily in an existing process of manufacturing the flow meter 1. Especially, it may be preferred to transmit temperature data along with existing data packets for transmitting a measured liquid flow quantity Q and e.g. also GPS data.

The temperature T to be transmitted for frost damage candidate analysis can alternatively or additionally be the fluid temperature determined by a sensor 5 mounted on the fluid pipe and extending through the fluid pipe into the liquid or by a sensor 6 mounted on a wall of the pit 7.

According to the invention a number of temperatures representing the temperatures in the pit 7 are transmitted to the server 3 or another receiver. The temperatures are measured during a time period of no-frost, such as during 1, 2 or 3 months in Summer. The temperatures will have the same daily or weekly patterns and trends and no disruptive changes in the temperatures are to be expected.

In the situation shown in FIG. 1b, the cover 8 has been displaced from its original and intended position, thus leaving the pit 7 partly or fully unprotected. This can happen if a service technician forgets to put the cover 8 back in place after servicing the pit 7. In the situation of FIG. 1b the temperature measured during day time will increase markedly compared to the situation with the cover 8 in place, because the sun rays now warm up the flow meter 1 directly, since there is no protection from the cover 8. The rise in temperature will be readily detectable by the server 3 by suitable data analysis taking into account preferably time series of temperatures from other similar flow meters placed in pits in the neighbourhood, and thus basically under the same weather conditions. It has been found possible to detect a flow meter in a pit 7 with the cover 8 removed as an outlier when comparing statistical parameters, e.g. based on calculating a distance measure between time series for temperatures measured by each flow meter in a group of neighouring flow meters.

A flow meter 1 detected as an outlier in such data analysis can be considered as a frost damage candidate, since the removed cover 8 will cause the flow meter 1 to be exposed to frost in the pit 7 compared to the situation in FIG. 1a with the cover 8 in place. Hence, the server 3 could act and signal a warning indicating the identified frost damage candidate flow meter, and since this is done already in the no frost period, there is sufficient time for service personnel to visit the frost damage candidate flow meter and to place the cover 8 in its original position before the frost period sets in and thus before there is an actual risk of frost damage of the flow meter 1.

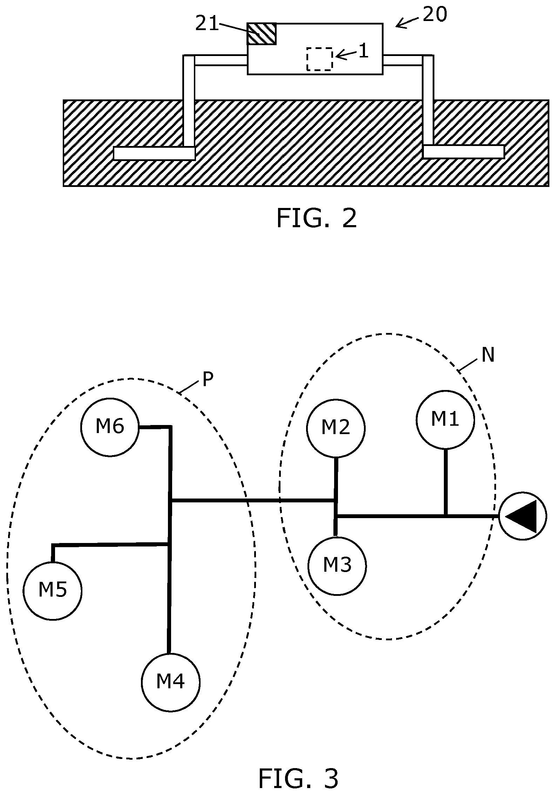

FIG. 2 shows an alternative position of the flow meter, namely inside an above-ground sensor box. Inside the box a flow meter of the same kind as in FIG. 1a or 1b is placed, thus protected by the box. Inside the box, the flow meter is protected against mechanical attacks, against rain, sun and frost. However, in FIG. 2 it can be seen that a corner 21 of the box has been damaged, and thus an undesired opening into the flow meter 1 exists. Through this opening frost could potentially cause the flow meter to freeze, i.e. the flow meter inside such damaged box is a potential frost damage candidate which could be identified by means of the present invention in the manner similar to that described above for the pit position shown in FIG. 1a and 1b.

FIG. 3 shows a plurality of flow meters M1 to M6 as part of a fluid distribution network. The fluid distribution network is supplied with water from a water utility company. From the main pipes service pipes are branched off, and in the service pipes, flow meters M1-M6 are installed to measure fluid flow quantities. E.g. these meters M1-M6 can be placed in pits as shown in FIG. 1a or 1b, or inside a box above ground level as shown in FIG. 2.

Each of the flow meters M1-M6 transmit temperature information to a receiver in the form of a computer or central server via a radio frequency communication network, such as LoRaWAN^{®} or via a cellular network using e.g. Nb-IOT.

In order to get an even more reliable statement about being a frost damage candidate or not, the strength of the radio signal sent from the flow meter is included in the data analysis by the processing unit 3. The inclusion of the signal strength is relevant for those flow meters that have have an RF antenna built into the flow meter or have the antenna placed in the pit or inside a box. Turning to FIG. 1a the radio signal will in the situation with the lid 8 correctly in place be dampened. The amount of dampening of the signal when passing through the lid is dependent on the material of the lid, say metal, plastic or wood, but in any case a removal of the lid as shown in FIG. 1b will result in a significant and detectable increase in signal strength. The processing unit 3 monitors over time - together with the monitoring of the temperatures measured by the flow meter - the development in the signal strength and an abrupt increase in the signal strength is an indication of a removed lid. Also a broken lid with cracks caused e.g. by the passage of cars over the lid may be detected. The same considerations applies to the situation of FIG. 2 where the damaged corner 21 enables the increase in the strength of signal sent from flow meter 1.

A very robust frost damage candidate detection is achieved if the parameters internal temperature of the flow meter, fluid temperature and RF signal strength of the flow meter are included in the data analysis (P_DA) performed by the processing unit 3.

In preferred embodiments of the invention, flow meters M1-M6 are grouped based on their geographical location, e.g. based on their GPS coordinates transmitted to the computer or central server. Hereby it is ensured, that the expected temperature variation due to geographical and local weather conditions is similar or at least comparable. This facilitates the finding of a potential frost candidate as an outlier in the group by suitable data analysis on measured time series of temperatures for all meters in a group.

In FIG. 3 flow meters M1, M2 and M3 are grouped into one group N, and flow meters M4, M5 and M6 are grouped into another group P. These groupings P, N could be made e.g. because group P members are placed at a higher altitude above sea level than the meters in group N, i.e. groups N and P are geographically different and thus temperatures measured by a meter M1 in one group N can be expected to differ from temperatures measured by a meter M4 in the other group P.

Taking into account such groupings of meters based on geographical location of the meters has been found to allow a more robust and thrustworthy frost damage candidate identification, and thus a more thrustworthy alarm can be given because meters operating under the same environmental conditions are correlated with each other. Preferably, their GPS locations could be used for grouping, or in case the distribution network has a mix of flow meters in different installation configurations (e.g. pit and above-ground box installed meters), the grouping could be make according to the installation configuration rather than geographical location.

In the following, more detail about a possible specific data analysis and identification of a frost damage candidate is given based on appropriate groups of meters, where it can be expected that the measured temperature of most meters in the group to be similar. This is preferably obtained by grouping the meters based on their geographical position, e.g. determed by their GPS coordinates. Additionally or alternteively, the grouping can be based on the type of installation configuration for the flow meters, e.g. placed in a pit or placed inside a box above ground level.

Thus, suitably grouped so that the flow meter in a group can be considered as similar with respect to geographical position, i.e. equally exposed to same weather conditions etc., and all flow meters being installed in the same type of installation configuration, e.g. all placed in a pit or all placed in a box above ground level, then the measured temperatures of most flow meters can be expected to be similar, also seen over time.

If however one or more flow meters are exposed to different conditions, e.g. placed in a pit with the cover removed, or placed in a box above ground level which is damaged, then it has been found possible to detect a temperature difference between such flow meter and the remaining flow meters of the group by applying a suitable data analysis, and such deviating flow meter is then considered as a frost damage candidate, since it can be expected that its data deviates due to the deviating condition which also means that the flow meter will be vulnerable in a frosty period.

Therefore, the problem of finding a frost damage candidate among the flow meters of a group it to identify a flow meter exhibiting temperatures which can be considered as an outlier when compared to the flow meters of the group. In short, such outlier problem can be identified as to find a flow meter with a temperature time series that is the most dissimilar from the other flow meters in the group. Such problem can be solved by calculating a statistical measure (i.e. a parameter) for each flow meter compared to the group of flow meters, and then, based on the statistical measure, it can be determined if one or more flow meters stand out or deviates significaly from the group. Such statistical measure can be calculated in many ways.

In the table below, an example of sample data for 10 meters (0-9) grouped in two groups (N and P) with monitored temperatures (°C) over seven days. The temperature per day can be a temperature calculated as an average of temperatures measured at a plurality of different times during the day.

**Table 1**

| group | meter_id | Day 1 | Day 2 | Day 3 | Day 4 | Day 5 | Day 6 | Day 7 |
|---|---|---|---|---|---|---|---|---|
| N | 0 | 14.61 | 14.38 | 15.6 | 14.96 | 12.2 | 16.34 | 17.57 |
| N | 1 | 14.54 | 14.74 | 15.43 | 14.06 | 12.17 | 16.76 | 17.68 |
| N | 2 | 14.7 | 14.11 | 15.05 | 14.93 | 12.42 | 16.03 | 17.22 |
| N | 3 | 14.49 | 14.32 | 15.1 | 14.83 | 17.13 | 21.2 | 22.17 |
| N | 4 | 14.89 | 14.74 | 15.78 | 14.07 | 12.13 | 16.16 | 17.31 |
| P | 5 | 14.13 | 14.16 | 15.04 | 14.35 | 12.11 | 16.16 | 17.76 |
| P | 6 | 14.23 | 14.46 | 15.69 | 14.69 | 12.85 | 16.85 | 17.41 |
| P | 7 | 14.32 | 14.9 | 15.07 | 14.81 | 12.77 | 16.9 | 17.72 |
| P | 8 | 14.76 | 14.83 | 15.74 | 14.64 | 12.45 | 16.81 | 17.45 |
| P | 9 | 14.35 | 14.4 | 15.55 | 14.99 | 12.06 | 16.05 | 17.06 |

As seen from Table 1, the flow meter with id 3 has a significant higher temperature over the last three days (Day 5, Day 6 and Day 7) than the rest of its group. One example of a method for finding the most dissimilar temperature series would be to create a summary series per group - this could be a mean or a median of the temperature per day. Using the median as an example: $t _ i = Median \left({X}_{i}\right)$ (1) where i is any day in the dataset, and X is the temperatures of the flow meters for that day. This produces a summary series for each group, and this series can then be used in similarity metrics to compare a flow meter series of the group to the summary series.

There are many possible metrics that can be used for the comparison - such as calculating the Euclidian distance of the flow meter's series to the summary series: $d = \sqrt{\left(x⋅t_i\right)}$ (2) where x is a flow meter series and t_i is the summary series per group.

Other possible metrics include: MSE (mean square error), MAPE (mean absolute percentage error), or dynamic time warping.

The data analysis may preferably also comprise determining a measure of variance in the series. However, for simplicity this is excluded in the present description.

The data analysis may preferably also comprise taking into account a liquid flow quantity measure by each flow meter. However, for simplicity this is also excluded in the present description.

If calculating for each flow meter a distance measure N_d calculated as: $N _ d = \sqrt{{\sum \left(T_m-T_s\right)}^{2}}$ (3) where T_m is the temperature values for the time series of the seven temperatures for the flow meter, while T_s it the average temperature values for the time series of the seven temperatures for the remaining flow meters in the group.

With the distance calculated as N_d described above, Table 2 shows the resulting distances for the temperature measurement values in Table 1.

**Table 2**

| Group | meter_id | N_d |
|---|---|---|
| N | 0 | 0.21 |
| N | 1 | 0.96 |
| N | 2 | 0.71 |
| N | 3 | **8.32** |
| N | 4 | 1.01 |
| P | 5 | 1.07 |
| P | 6 | 0.44 |
| P | 7 | 0.79 |
| P | 8 | 0.61 |
| P | 9 | 0.99 |

From Table 2, it can be seen that the flow meter with id of 3 has a significant larger distance N_d to the summary series than the other meters in its group (N). Consequently, the flow meter with id 3 can be identified as a frost damage candidate.

The other group (P) does not show any significant distances for any of the meters (5-9), and thus none of these flow meters (5-9) is identified as a frost damage candidate.

In the above example, frost damage candidate flow meters are identified by determining temperature deviations in each single flow meter with respect to a time series of temperatures measured in a group of flow meters. However, in a simpler data analysis version, the daily minimum and maximum temperatures for each individual flow meter is monitored over a period of time, e.g. 10 days, and if one flow meter exhibits a pattern over time deviating from its normal behaviour, the flow meter may be identified as a frost damage candidate, since this could indicate an abnormal condition of the flow meter. Especially, an abnormal behaviour may be observed, and if the same abnormal behaviour continues over several days, the flow meter may be identified as a frost damage candidate. Hereby, with such delay in idenfitying a frost damage candidate, the risk of false identified frost damage candidcates can be reduced.

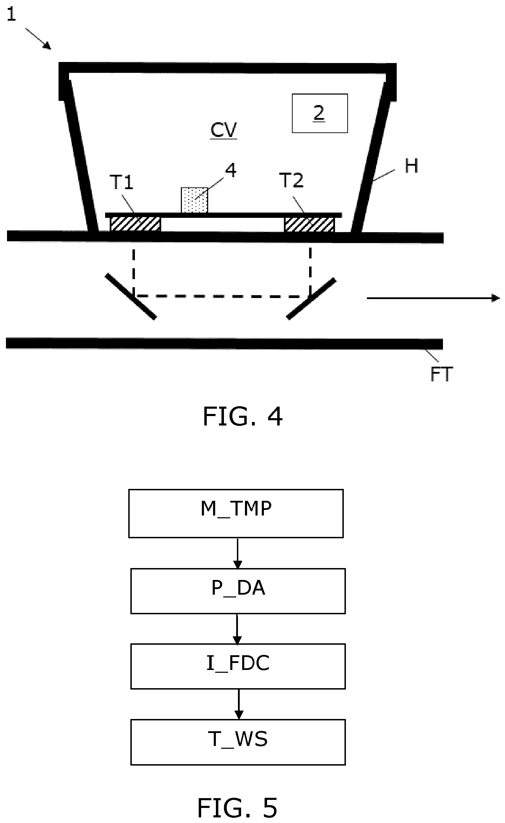

FIG. 4 illustrates a specific ultrasonic flow meter 1 configured for the present invention. Namely, a flow meter 1 with a housing H and flow tube FT for mounting on a pipe of a fluid distribution network for meausuring a fluid flow quantity by ultrasonic piezo transducers T1, T2 arranged inside a cavity CV formed by the hosing H and being configured for transmitting ultrasonic waves through the wall of the flow tube FT and for transmitting ultrasonic waves (dashed lines) along the fluid flow direction (arrow) via reflectors inside the flow tube FT. In this way a fluid flow quantity can be calculated by transit-time measurements made by ultrasonic piezo transducers T1, T2, and this quantity can be transmitted in a wireless radio frequency signal by transmitter 2 placed inside the cavity CV of the housing H.

Further, a temperature sensor 4 for measuring the air temperature inside the cavity CV of the housing H is seen, here illustrated as mounted on a printed circuit box which allows easy manufacturing and facilitates electric connection to a measurement circuit which may be also mounted on the same printed circuit board. The temperatures measured by the temperature sensor 4 are also transmitted via the radio transmitter 2, and these transmitted temperatures can then be used for data analysis for frost damage candidate identification according tot the invention.

FIG. 5 illustrates steps of a method embodiment, where each of a plurality of flow meters are configured to measure air temperature, and to wirelessly transmit the measured temperature to a processing unit. The method comprises during a no-frost period monitoring M_TMP the temperatures measured by the plurality of flow meters over a period of time, such as monitoring for each flow meters, a time series of temperatures measured at respective times during the no-frost period. Then, performing a data analysis P_DA on the temperatures, preferably temperature series, of the plurality of flow meters from the no-frost period. Further, based on the data analysis, identifying I_FDC one or more ones of the plurality of flow meters as frost damage candidates in a future frost period, and finally transmitting T_WS a warning signal indicative of the frost damage candidates, which in turn allows service personnel to initiate frost protection measures to protect the frost damage candidates.

Instead of or additionally to the warning signal a signal can be send to auxiliary equipment such as a valve built into the flow meter or placed in the pipe up stream or down stream of the flow meter, and then actuate such valve to close or open the fluid flow in order to prevent or mitigate frost damage.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention.

## Claims

1. A method for preventing frost damage to one or more flow meters installed in a fluid distribution network containing a fluid, wherein each flow meter is configured to measure an air temperature, and to wirelessly transmit via radio signals the measured temperature, such as via a cellular network or a fixed wireless reading system to a processing unit, the method comprising the following steps:
- continuously monitoring (M_TMP) over a period of time the temperatures measured by the plurality of flow meters, such as monitoring for each flow meter, a time series of temperatures measured at respective times during the period,
- performing a data analysis (P_DA) on the temperatures measured by the flow meters over the period of time,
- based on the data analysis, identifying (I_FDC) one or more ones of the plurality of flow meters as frost damage candidates in a future frost period, and
- transmitting (T_WS) a warning signal indicative of the frost damage candidates or initiating frost protection measures to protect the frost damage candidates,
**characterized in that** the step of performing a data analysis comprises comparing statistical parameters based on calculating a distance measure between time series for temperatures measured by each flow meter in a group of neighboring flow meters.

2. The method according to claim 1, comprising monitoring (M_TMP) the temperatures measured by the plurality of flow meters over a period of time during a no-frost period.

3. The method according to claim 1 or 2, comprising continuously monitoring (M_TMP) minimum and maximum temperatures measured for at least a group of the plurality of flow meters, such as monitoring minimum and maximum temperatures per day for each of the plurality of flow meters over a period of time, such as identifying (I_FDC) a frost damage candidate as a flow meter exhibiting minimum and maximum temperatures deviating from its normal individual pattern when measured over a period of time, such as identifying (I_FDC) a frost damage candidate as a flow meter exhibiting minimum and maximum temperatures deviating from a group of flow meters when measured over a period of time, such as exhibiting minimum and maximum temperatures deviating by more than a predetermined amount from a group of flow meters when measured over a period of time.

4. The method according to claim 3, comprising determining for each of the plurality of flow meters an averaged minimum temperature and an averaved maximum temperature in response to minimum temperatures and maximum temperatures observed over a period of time, such as a period of 5-20 day, such as period of 5-15 days, such as a period of 8-12 days.

5. The method according to any of claims 1-4, wherein the plurality of flow meters monitored are placed in geographical proximity of each other, such as within 50-100 km² square kilometers, or within 1-50 km², or below 1 km², such as the plurality of flow meters being positioned in the fluid distribution network in the same type of installation configuration, such as in a pit (7) or in a box (20) above ground level.

6. The method according to any of claims 1-5, wherein the temperature measured by each of the plurality of flow meters is an inside air temperature of the flow meter, such as a temperature measured by a temperature sensor arranged inside a housing of the flow meter, such as a temperature sensor arranged inside a cavity of the housing where at least a part of a flow measurement circuit of the flow meter is arranged.

7. The method according to any of claims 1-6, wherein a frost damage candidate is identified as a flow meter having a measured time series of temperatures which is dissimilar to corresponding time series of temperatures measured by a group of other ones of the plurality of flow meters according to the data analysis, such as identified as a flow meter having a measured time series of temperatures which differs by more than a predetermined amount from corresponding time series of temperatures measured by a group of other ones of the plurality of flow meters according to the data analysis, such as the frost damage candidate being identified as a flow meter being an outlier with respect to measured time series of temperatures during the period, e.g. a period including a no-frost period.

8. The method according to claim 7, wherein the data analysis comprises calculating a statistical value for each flow meter based on the measured time series of temperatures during the no-frost period, and wherein a frost damage candicate is identified as a flow meter exhibiting a statistical value which differs by more than a preset threshold from the group (N, P) of other ones of the flow meters, such as the data analysis comprising performing a statistical analysis of the measure time series of temperatures, such as the data analysis comprising calculating a mean or median of the temperature for a period of time, such as per day, measured during the no-frost period for a group of the plurality of flow meters, and wherein a distance measure (N_d) is calculated, such as Euclidian distance measure, between said mean or median for the group of flow meters and the measured temperature in the same period of time for each of the flow meters, so a to identify a frost damage candidate.

9. The method according to any of claims 1-8, wherein the step of identifying a frost damage candidate involves taking into account a measured fluid flow for each of the plurality of flow meters in the period of time of monitoring, such as discarding temperature measurements for a flow meter if measured at a time where the flow meter has measured a fluid flow outside a predetermined interval.

10. The method according to claim 8 or 9, comprising identifying one or more of the plurality of flow meters as frost damage candidates only if the one or more flow meters exhibits a statistical value differing by more than a preset threshold from the group (N, P) of other ones of the flow meters over a period of time, such as over a plurality of days.

11. The method according to any of claims 1-10, wherein the data analysis comprises calculating a correlation coefficient of temperatures measured by each of the plurality of flow meters in relation to temperatures measured in the same time period by other ones of the plurality of flow meters, such as temperatures measured in the same time period by all other ones of the plurality of flow meters being located in the same geographical area, such as a frost damage candidate is identified as a flow meter having a measured one or more temperatures during a no-frost period or another period of time which result in a correlation coefficient which is numerically below a preset threshold value.

12. The method according to any of claims 1-11, wherein a signal strength of a radio (2) signal is detected by the processing unit (3), and wherein the signal strength is used as a further parameter in the data analysis (P_DA) on the temperatures measured.

13. A system for monitoring a fluid distribution network which comprises pipes and a plurality of flow meters (M1-M6), said flow meters being placed at respective positions in the fluid distribution network, such as placed in a pit (7) or inside a box (20), wherein each of the flow meters are configured for measuring a an air temperature, and further being configured for wirelessly transmitting the measured temperature to a processing unit (3), such as via a mobile or fixed wireless reading system to the processing unit, wherein
- the processing unit (3), such as a local computer or a central server, can access a temperature database holding temperatures measured by the plurality of flow meters during a period, such as time series of temperatures for each of the flow meters over a period comprising a period,
- the processing unit has a data analysis unit which is configured to analyse the temperatures measured by the plurality of flow meters from the period, comprising comparing statistical parameters based on calculating a distance measure between time series for temperatures measured by each flow meter in a group of neighboring flow meters,
- the processing unit has an identification unit which, based on a result from the data analysis unit, is configured to identify one or more of the flow meters as frost damage candidates in a future frost period, and
- the processing unit generates a warning signal indicative of the identified frost damage candidates or initiates frost protection activities to protect the frost damage candidates,
**characterized in that** the data analysis unit is configured to compare statistical parameters based on calculating a distance measure between time series for temperatures measured by each flow meter in a group of neighboring flow meters.

14. The system according to claim 13, wherein the warning signal is generated in a no-frost period.

15. The system according to claim 13 or 14, wherein the flow meters are arranged to transmit their respective positions, such as GPS positions, to the processing unit, and that the processing unit is arranged to group the flow meters into groups with geographically neighbouring flow meters in response to their positions, and wherein the data analysis unit is arranged to perform the data analysis based on said groups of neighbouring flow meters.

16. The system according to any of claims 13-15, wherein the flow meters are ultrasonic flow meters and the temperature measured is a temperature of the fluid calculated from transit-time measurements made by ultrasonic piezo transducers.

17. The system according to any of claims 13-16, wherein the flow meters are arranged to measure both an air temperature and a fluid temperature, such as measuring air temperature and fluid temperature simultaneously or nearly simultaneously.

18. The system according to any of claims 13-17, wherein the flow meters are ultrasonic flow meters (1) and wherein the temperature measured is an internal flow meter temperature measured by a temperature sensor placed inside a housing of the flow meter, such as the temperature sensor being placed on a printed circuit board inside the housing of the flow meter, preferably the flow meters are arranged to transmit the measured temperature represented as data in wireless data packets along with data representing a measured fluid flow quantity.

19. The system according to any of claims 13-18, wherein the temperature database of the server further includes meteorological temperature data provided by a third party meteorological wheather data provider, and wherein the data analysis unit is arranged to analyse the temperatures of the plurality of flow meters from the no-frost period along with the meteorological temperature data.

## Patentansprüche

1. Verfahren zum Verhindern von Frostschäden an einem oder mehreren Durchflussmessern, die in einem Fluidverteilungsnetz installiert sind, das ein Fluid aufweist, wobei jeder Durchflussmesser so ausgebildet ist, dass er eine Lufttemperatur misst und die gemessene Temperatur drahtlos über Funksignale, wie zum Beispiel über ein Mobilfunknetz oder ein festes drahtloses Auslesesystem, an eine Verarbeitungseinheit überträgt, wobei das Verfahren die folgenden Schritte umfasst:
- kontinuierliches Überwachen (M_TMP) der von der Vielzahl von Durchflussmessern gemessenen Temperaturen über eine Zeitperiode hinweg, wie zum Beispiel Überwachen einer Zeitreihe von Temperaturen für jeden Durchflussmesser, die zu jeweiligen Zeitpunkten während der Periode gemessen wurden,
- Durchführen einer Datenanalyse (P_DA) der von den Durchflussmessern über die Zeitperiode hinweg gemessenen Temperaturen,
- auf der Grundlage der Datenanalyse Identifizieren (I_FDC) eines oder mehrerer der Vielzahl von Durchflussmessern als Kandidaten für Frostschäden in einer zukünftigen Frostperiode, und
- Übertragen (T_WS) eines Warnsignals, das auf die Kandidaten für Frostschäden hinweist, oder Einleiten von Frostschutzmaßnahmen zum Schutz der Kandidaten für Frostschäden, **dadurch gekennzeichnet, dass** der Schritt des Durchführens einer Datenanalyse das Vergleichen statistischer Parameter umfasst, auf der Grundlage einer Berechnung eines Abstandsmaßes zwischen Zeitreihen für Temperaturen, die von jedem Durchflussmesser in einer Gruppe benachbarter Durchflussmesser gemessen wurden.

2. Verfahren nach Anspruch 1, umfassend das Überwachen (M_TMP) der von der Vielzahl von Durchflussmessern gemessenen Temperaturen über eine Zeitperiode während einer frostfreien Periode.

3. Verfahren nach Anspruch 1 oder 2, umfassend das kontinuierliche Überwachen (M_TMP) der für mindestens eine Gruppe der Vielzahl von Durchflussmessern gemessenen Minimal- und Maximaltemperaturen, wie zum Beispiel das Überwachen der täglichen Minimal- und Maximaltemperaturen für jeden der Vielzahl von Durchflussmessern über eine Zeitperiode hinweg, wie zum Beispiel das Identifizieren (I_FDC) eines Kandidaten für Frostschäden als einen Durchflussmesser, der bei einer Messung über eine Zeitperiode hinweg von seinem normalen individuellen Muster abweichende Minimal- und Maximaltemperaturen aufweist, wie zum Beispiel das Identifizieren (I_FDC) eines Kandidaten für Frostschäden als einen Durchflussmesser, der bei einer Messung über eine Zeitperiode hinweg von einer Gruppe von Durchflussmessern abweichende Minimal- und Maximaltemperaturen aufweist, wie zum Beispiel das Aufweisen von Minimal- und Maximaltemperaturen, die bei einer Messung über eine Zeitperiode hinweg um mehr als einen vorbestimmten Betrag von einer Gruppe von Durchflussmessern abweichen.

4. Verfahren nach Anspruch 3, umfassend das Bestimmen einer gemittelten Mindesttemperatur und einer gemittelten Höchsttemperatur für jeden der Vielzahl von Durchflussmessern als Reaktion auf Minimaltemperaturen und Maximaltemperaturen, die über eine Zeitperiode hinweg, wie zum Beispiel eine Periode von 5 - 20 Tagen, wie zum Beispiel eine Periode von 5 - 15 Tagen, wie zum Beispiel eine Periode von 8 - 12 Tagen, beobachtet werden.

5. Verfahren nach einem der Ansprüche 1 - 4, wobei die Vielzahl von überwachten Durchflussmessern in geografischer Nähe zueinander platziert sind, wie zum Beispiel innerhalb von 50 - 100 km² Quadratkilometern oder innerhalb von 1 - 50 km²oder unter 1 km², wie zum Beispiel sind die Vielzahl von Durchflussmessern in dem Fluidverteilungsnetz in derselben Art von Installationskonfiguration positioniert, wie zum Beispiel in einem Schacht (7) oder in einem Kasten (20) über dem Bodenniveau.

6. Verfahren nach einem der Ansprüche 1 - 5, wobei die von jedem der Vielzahl von Durchflussmessern gemessene Temperatur eine Innenlufttemperatur des Durchflussmessers ist, wie zum Beispiel eine Temperatur, die von einem Temperatursensor gemessen wird, der innerhalb eines Gehäuses des Durchflussmessers angeordnet ist, wie zum Beispiel einem Temperatursensor, der innerhalb eines Hohlraums des Gehäuses angeordnet ist, in dem zumindest ein Teil einer Durchflussmessschaltung des Durchflussmessers angeordnet ist.

7. Verfahren nach einem der Ansprüche 1 - 6, wobei ein Kandidat für Frostschäden als ein Durchflussmesser identifiziert wird, der eine gemessene Zeitreihe von Temperaturen aufweist, die sich entsprechend der Datenanalyse von den entsprechenden Zeitreihen von Temperaturen unterscheidet, die von einer Gruppe anderer der Vielzahl von Durchflussmessern gemessen wurden, wie zum Beispiel als ein Durchflussmesser mit einer gemessenen Zeitreihe von Temperaturen identifiziert wird, die sich entsprechend der Datenanalyse um mehr als einen vorbestimmten Betrag von den entsprechenden Zeitreihen von Temperaturen unterscheidet, die von einer Gruppe anderer der Vielzahl von Durchflussmessern gemessen wurden, wie zum Beispiel der Kandidat für Frostschäden als ein Durchflussmesser identifiziert wird, der hinsichtlich der gemessenen Zeitreihen von Temperaturen während der Periode - z. B. einer Periode, die eine frostfreie Periode enthält - einen Ausreißer darstellt.

8. Verfahren nach Anspruch 7, wobei die Datenanalyse das Berechnen eines statistischen Werts für jeden Durchflussmesser auf der Grundlage der gemessenen Zeitreihen von Temperaturen während der frostfreien Periode umfasst und wobei ein Kandidat für Frostschäden als ein Durchflussmesser identifiziert wird, der einen statistischen Wert aufweist, der sich um mehr als einen voreingestellten Schwellenwert von der Gruppe (N, P) der anderen der Durchflussmesser unterscheidet, wie zum Beispiel die Datenanalyse das Durchführen einer statistischen Analyse der gemessenen Zeitreihen von Temperaturen umfasst, wie zum Beispiel die Datenanalyse das Berechnen eines Mittelwerts oder Medians der Temperatur für eine Zeitperiode, wie zum Beispiel pro Tag, umfasst, der während der frostfreien Periode für eine Gruppe der Vielzahl von Durchflussmessern gemessen wurde, und wobei ein Abstandsmaß (N_d), wie zum Beispiel ein euklidisches Abstandsmaß, zwischen dem Mittelwert oder Median für die Gruppe der Durchflussmesser und der in der gleichen Zeitperiode für jeden der Durchflussmesser gemessenen Temperatur berechnet wird, um einen Kandidaten für Frostschäden zu identifizieren.

9. Verfahren nach einem der Ansprüche 1 - 8, wobei der Schritt des Identifizierens eines Kandidaten für Frostschäden die Berücksichtigung eines gemessenen Fluiddurchflusses für jeden der Vielzahl von Durchflussmessern in der Zeitperiode des Überwachens beinhaltet, wie zum Beispiel das Verwerfen von Temperaturmessungen für einen Durchflussmesser, wenn diese zu einem Zeitpunkt gemessen wurden, zu dem der Durchflussmesser einen Fluiddurchfluss außerhalb eines vorbestimmten Intervalls gemessen hat.

10. Verfahren nach Anspruch 8 oder 9, umfassend das Identifizieren eines oder mehrerer der Vielzahl von Durchflussmessern als Kandidaten für Frostschäden nur dann, wenn der eine oder die mehreren Durchflussmesser über eine Zeitperiode hinweg, wie zum Beispiel über eine Vielzahl von Tagen hinweg, einen statistischen Wert aufweisen, der sich um mehr als einen voreingestellten Schwellenwert von der Gruppe (N, P) anderer der Durchflussmesser unterscheidet.

11. Verfahren nach einem der Ansprüche 1 - 10, wobei die Datenanalyse das Berechnen eines Korrelationskoeffizienten von Temperaturen, die von jedem der Vielzahl von Durchflussmessern gemessen werden, in Bezug auf Temperaturen umfasst, die in der gleichen Zeitperiode von anderen der Vielzahl von Durchflussmessern gemessen werden, wie zum Beispiel Temperaturen, die in der gleichen Zeitperiode von allen anderen der Vielzahl von Durchflussmessern gemessen werden, die sich in dem gleichen geografischen Gebiet befinden, wie zum Beispiel ein Kandidat für Frostschäden als ein Durchflussmesser identifiziert wird, der eine oder mehrere Temperaturen während einer frostfreien Periode oder einer anderen Zeitperiode gemessen hat, die zu einem Korrelationskoeffizienten führen, der numerisch unter einem voreingestellten Schwellenwert liegt.

12. Verfahren nach einem der Ansprüche 1 - 11, wobei eine Signalstärke eines Funk- (2) Signals von der Verarbeitungseinheit (3) detektiert wird und wobei die Signalstärke als ein weiterer Parameter bei der Datenanalyse (P_DA) der gemessenen Temperaturen verwendet wird.

13. System zur Überwachung eines Fluidverteilungsnetzes, das Rohrleitungen und eine Vielzahl von Durchflussmessern (M1-M6) umfasst, wobei die Durchflussmesser an jeweiligen Positionen in dem Fluidverteilungsnetz platziert sind, wie zum Beispiel in einem Schacht (7) oder innerhalb eines Kastens (20) platziert sind, wobei jeder der Durchflussmesser so ausgebildet ist, dass er eine Lufttemperatur misst, und weiter so ausgebildet ist, dass er die gemessene Temperatur drahtlos an eine Verarbeitungseinheit (3) überträgt, wie zum Beispiel über ein mobiles oder festes drahtloses Auslesesystem an die Verarbeitungseinheit, wobei
- die Verarbeitungseinheit (3), wie zum Beispiel ein lokaler Computer oder ein zentraler Server, auf eine Temperaturdatenbank zugreifen kann, die von der Vielzahl von Durchflussmessern während einer Periode gemessene Temperaturen enthält, wie zum Beispiel Zeitreihen von Temperaturen für jeden der Durchflussmesser über eine Periode hinweg, die eine Periode umfasst,
- die Verarbeitungseinheit eine Datenanalyseeinheit aufweist, die so ausgebildet ist, dass sie die von der Vielzahl von Durchflussmessern aus der Periode gemessenen Temperaturen analysiert, was das Vergleichen statistischer Parameter auf der Grundlage des Berechnens eines Abstandsmaßes zwischen Zeitreihen für die von jedem Durchflussmesser in einer Gruppe benachbarter Durchflussmesser gemessenen Temperaturen umfasst,
- die Verarbeitungseinheit eine Identifizierungseinheit aufweist, die auf der Grundlage eines Ergebnisses der Datenanalyseeinheit so ausgebildet ist, dass sie einen oder mehrere der Durchflussmesser als Kandidaten für Frostschäden in einer zukünftigen Frostperiode identifiziert, und
- die Verarbeitungseinheit ein Warnsignal erzeugt, das auf die identifizierten Kandidaten für Frostschäden hinweist, oder Frostschutzmaßnahmen einleitet, um die Kandidaten für Frostschäden zu schützen, **dadurch gekennzeichnet, dass** die Datenanalyseeinheit so ausgebildet ist, dass sie statistische Parameter vergleicht, auf der Grundlage eines Berechnens eines Abstandsmaßes zwischen Zeitreihen für Temperaturen, die von jedem Durchflussmesser in einer Gruppe benachbarter Durchflussmesser gemessen werden.

14. System nach Anspruch 13, wobei das Warnsignal in einer frostfreien Periode erzeugt wird.

15. System nach Anspruch 13 oder 14, wobei die Durchflussmesser so angeordnet sind, dass sie ihre jeweiligen Positionen, wie zum Beispiel GPS-Positionen, an die Verarbeitungseinheit übertragen, und dass die Verarbeitungseinheit so angeordnet ist, dass sie die Durchflussmesser als Reaktion auf ihre Positionen in Gruppen mit geografisch benachbarten Durchflussmessern gruppiert, und wobei die Datenanalyseeinheit so angeordnet ist, dass sie die Datenanalyse auf der Grundlage der Gruppen benachbarter Durchflussmesser durchführt.

16. System nach einem der Ansprüche 13 - 15, wobei die Durchflussmesser Ultraschall-Durchflussmesser sind und die gemessene Temperatur eine Temperatur des Fluids ist, die aus Laufzeitmessungen berechnet wird, die von Ultraschall-Piezo-Wandlern durchgeführt werden.

17. System nach einem der Ansprüche 13 - 16, wobei die Durchflussmesser so angeordnet sind, dass sie sowohl eine Lufttemperatur als auch eine Fluidtemperatur messen, wie zum Beispiel gleichzeitig oder nahezu gleichzeitig die Lufttemperatur und die Fluidtemperatur messen.

18. System nach einem der Ansprüche 13 - 17, wobei die Durchflussmesser Ultraschall-Durchflussmesser (1) sind und wobei die gemessene Temperatur eine interne Durchflussmessertemperatur ist, die von einem innerhalb eines Gehäuses des Durchflussmessers platzierten Temperatursensor gemessen wird, wie zum Beispiel der Temperatursensor auf einer Leiterplatte innerhalb des Gehäuses des Durchflussmessers platziert ist; vorzugsweise die Durchflussmesser so angeordnet sind, dass sie die gemessene Temperatur, dargestellt als Daten in drahtlosen Datenpaketen, zusammen mit Daten, die eine gemessene Fluiddurchflussmenge darstellen, übertragen.

19. System nach einem der Ansprüche 13 - 18, wobei die Temperaturdatenbank des Servers weiter meteorologische Temperaturdaten enthält, die von einem externen Anbieter von meteoroligischen Wetterdaten bereitgestellt werden, und wobei die Datenanalyseeinheit so angeordnet ist, dass sie die Temperaturen der Vielzahl von Durchflussmessern aus der frostfreien Periode zusammen mit den meteorologischen Temperaturdaten analysiert.

## Revendications

1. Procédé de prévention des dommages causés par le gel à un ou plusieurs débitmètres installés dans un réseau de distribution de fluide contenant un fluide, chaque débitmètre étant configuré pour mesurer une température de l'air et pour transmettre sans fil au moyen de signaux radio la température mesurée, par exemple au moyen d'un réseau cellulaire ou d'un système de relevé fixe sans fil, à une unité de traitement, le procédé comprenant les étapes suivantes :
- surveillance en continu (M_TMP), sur une période donnée, des températures mesurées par la pluralité de débitmètres, par exemple la surveillance, pour chaque débitmètre, d'une série chronologique de températures mesurées à des instants respectifs pendant la période,
- exécution d'une analyse de données (P_DA) sur les températures mesurées par les débitmètres au cours de la période donnée,
- sur la base de l'analyse de données, identification (I_FDC) d'un ou de plusieurs des débitmètres parmi la pluralité de débitmètres en tant que candidats à des dommages causés par le gel lors d'une future période de gel, et
- transmission (T_WS) d'un signal d'alerte indiquant les candidats à des dommages causés par le gel ou déclenchement de mesures de protection contre le gel pour protéger les candidats à des dommages causés par le gel,
**caractérisé en ce que** l'étape d'exécution d'une analyse de données comprend la comparaison de paramètres statistiques sur la base du calcul d'une mesure de distance entre des séries chronologiques de températures mesurées par chaque débitmètre dans un groupe de débitmètres voisins.

2. Procédé selon la revendication 1, comprenant la surveillance (M_TMP) des températures mesurées par la pluralité de débitmètres sur une période donnée pendant une période sans gel.

3. Procédé selon la revendication 1 ou 2, comprenant la surveillance en continu (M_TMP) des températures minimales et maximales mesurées pour au moins un groupe parmi la pluralité de débitmètres, par exemple la surveillance des températures minimales et maximales par jour pour chacun parmi la pluralité de débitmètres sur une période donnée, par exemple l'identification (I_FDC) d'un candidat à des dommages causés par le gel en tant que débitmètre présentant des températures minimales et maximales s'écartant de son profil individuel normal lorsqu'elles sont mesurées sur une période donnée, par exemple l'identification (I_FDC) d'un candidat à des dommages causés par le gel en tant que débitmètre présentant des températures minimales et maximales s'écartant de celles d'un groupe de débitmètres lorsqu'elles sont mesurées sur une période donnée, par exemple présentant des températures minimales et maximales s'écartant de plus d'une valeur préétablie de celles d'un groupe de débitmètres lorsqu'elles sont mesurées sur une période donnée.

4. Procédé selon la revendication 3, comprenant la détermination, pour chacun parmi la pluralité de débitmètres, d'une température minimale moyennée et d'une température maximale moyennée sur la base de températures minimales et de températures maximales observées sur une période donnée, telle qu'une période de 5 à 20 jours, telle qu'une période de 5 à 15 jours, telle qu'une période de 8 à 12 jours.

5. Procédé selon l'une quelconque des revendications 1-4, dans lequel la pluralité de débitmètres surveillés sont placés à proximité géographique les uns des autres, par exemple dans une zone de 50 à 100 kilomètres carrés, ou dans une zone de 1 à 50 km², ou dans une zone inférieure à 1 km², par exemple la pluralité de débitmètres étant positionnés dans le réseau de distribution de fluide selon le même type de configuration d'installation, par exemple dans un regard (7) ou dans un coffret (20) au-dessus du niveau du sol.

6. Procédé selon l'une quelconque des revendications 1-5, dans lequel la température mesurée par chacun parmi la pluralité de débitmètres est une température de l'air intérieur du débitmètre, par exemple une température mesurée par un capteur de température disposé à l'intérieur d'un boîtier du débitmètre, par exemple un capteur de température disposé à l'intérieur d'une cavité du boîtier où est disposée au moins une partie d'un circuit de mesure de débit du débitmètre.

7. Procédé selon l'une quelconque des revendications 1-6, dans lequel un candidat à des dommages causés par le gel est identifié en tant que débitmètre présentant une série chronologique mesurée de températures qui est différente des séries chronologiques correspondantes de températures mesurées par un groupe d'autres débitmètres parmi la pluralité de débitmètres selon l'analyse de données, par exemple est identifié en tant que débitmètre présentant une série chronologique de températures mesurée qui s'écarte de plus d'une valeur préétablie des séries chronologiques correspondantes de températures mesurées par un groupe d'autres débitmètres parmi la pluralité de débitmètres selon l'analyse de données, par exemple le candidat à des dommages causés par le gel étant identifié en tant que débitmètre constituant une valeur aberrante par rapport à la série chronologique de températures mesurée pendant la période, par exemple une période incluant une période sans gel.

8. Procédé selon la revendication 7, dans lequel l'analyse de données comprend le calcul d'une valeur statistique pour chaque débitmètre sur la base de la série chronologique mesurée des températures pendant la période sans gel, et dans lequel un candidat à des dommages causés par le gel est identifié en tant que débitmètre présentant une valeur statistique qui s'écarte de plus d'un seuil prédéfini de celle du groupe (N, P) d'autres débitmètres parmi les débitmètres, par exemple l'analyse de données comprenant l'exécution d'une analyse statistique de la série chronologique mesurée de températures, par exemple l'analyse de données comprenant le calcul d'une moyenne ou d'une médiane de la température sur une période donnée, par exemple par jour, mesurée pendant la période sans gel pour un groupe parmi la pluralité de débitmètres, et dans lequel une mesure de distance (N_d), telle qu'une mesure de distance euclidienne, est calculée entre ladite moyenne ou médiane pour le groupe de débitmètres et la température mesurée au cours de la même période pour chacun des débitmètres, de manière à identifier un candidat à des dommages causés par le gel.

9. Procédé selon l'une quelconque des revendications 1-8, dans lequel l'étape d'identification d'un candidat à des dommages causés par le gel fait intervenir la prise en compte d'un débit de fluide mesuré pour chacun parmi la pluralité de débitmètres au cours de la période de surveillance, par exemple le rejet de mesures de température pour un débitmètre si celles-ci ont été effectuées à un moment où le débitmètre a mesuré un débit de fluide en dehors d'un intervalle préétabli.

10. Procédé selon la revendication 8 ou 9, comprenant l'identification d'un ou de plusieurs débitmètres parmi la pluralité de débitmètres en tant que candidats à des dommages causés par le gel uniquement si lesdits un ou plusieurs débitmètres présentent une valeur statistique s'écartant de plus d'un seuil préétabli de celle du groupe (N, P) d'autres débitmètres parmi les débitmètres sur une période donnée, par exemple sur une pluralité de jours.

11. Procédé selon l'une quelconque des revendications 1-10, dans lequel l'analyse de données comprend le calcul d'un coefficient de corrélation de températures mesurées par chacun parmi la pluralité de débitmètres en relation avec les températures mesurées au cours de la même période par d'autres débitmètres parmi la pluralité de débitmètres, par exemple les températures mesurées au cours de la même période par tous les autres débitmètres parmi la pluralité de débitmètres qui sont situés dans la même zone géographique, par exemple un candidat à des dommages causés par le gel est identifié comme étant un débitmètre présentant une ou plusieurs températures mesurées pendant une période sans gel ou une autre période donnée qui conduisent à un coefficient de corrélation qui est numériquement inférieur à une valeur seuil préétablie.

12. Procédé selon l'une quelconque des revendications 1-11, dans lequel une intensité de signal d'un signal radio (2) est détectée par l'unité de traitement (3), et dans lequel l'intensité de signal est utilisée comme paramètre supplémentaire dans l'analyse de données (P_DA) relatives aux températures mesurées.

13. Système de surveillance d'un réseau de distribution de fluide comprenant des conduites et une pluralité de débitmètres (M1-M6), lesdits débitmètres étant placés à des emplacements respectifs dans le réseau de distribution de fluide, par exemple placés dans un regard (7) ou à l'intérieur d'un coffret (20), chacun des débitmètres étant configuré pour mesurer une température de l'air, et étant en outre configuré pour transmettre sans fil la température mesurée à une unité de traitement (3), par exemple au moyen d'un système de relevé sans fil mobile ou fixe à l'unité de traitement, dans lequel
- l'unité de traitement (3), telle qu'un ordinateur local ou un serveur central, peut accéder à une base de données de températures contenant des températures mesurées par la pluralité de débitmètres pendant une période donnée, par exemple une série chronologique de températures pour chacun des débitmètres sur une période donnée comprenant une période,
- l'unité de traitement comporte une unité d'analyse de données qui est configurée pour analyser les températures mesurées par la pluralité de débitmètres au cours de la période, ce qui comprend la comparaison de paramètres statistiques sur la base du calcul d'une mesure de distance entre des séries chronologiques de températures mesurées par chaque débitmètre dans un groupe de débitmètres voisins,
- l'unité de traitement comporte une unité d'identification qui, sur la base d'un résultat provenant de l'unité d'analyse de données, est configurée pour identifier un ou plusieurs parmi les débitmètres en tant que candidats à des dommages causés par le gel au cours d'une future période de gel, et
- l'unité de traitement génère un signal d'alerte indiquant les candidats à des dommages causés par le gel ou déclenche des activités de protection contre le gel pour protéger les candidats à des dommages causés par le gel,
**caractérisé en ce que** l'unité d'analyse de données est configurée pour comparer des paramètres statistiques sur la base du calcul d'une mesure de distance entre des séries chronologiques de températures mesurées par chaque débitmètre dans un groupe de débitmètres voisins.

14. Système selon la revendication 13, dans lequel le signal d'alerte est généré pendant une période sans gel.

15. Système selon la revendication 13 ou 14, dans lequel les débitmètres sont conçus pour transmettre leurs positions respectives, telles que des positions GPS, à l'unité de traitement, et dans lequel l'unité de traitement est conçue pour répartir les débitmètres en groupes comportant des débitmètres géographiquement voisins sur la base de leurs positions, et dans lequel l'unité d'analyse de données est conçue pour effectuer l'analyse des données sur la base desdits groupes de débitmètres voisins.

16. Système selon l'une quelconque des revendications 13-15, dans lequel les débitmètres sont des débitmètres à ultrasons et la température mesurée est une température du fluide calculée à partir de mesures du temps de transit effectuées par des transducteurs piézoélectriques à ultrasons.

17. Système selon l'une quelconque des revendications 13-16, dans lequel les débitmètres sont conçus pour mesurer à la fois une température de l'air et une température du fluide, par exemple en mesurant simultanément ou quasi simultanément la température de l'air et la température du fluide.

18. Système selon l'une quelconque des revendications 13-17, dans lequel les débitmètres sont des débitmètres à ultrasons (1) et dans lequel la température mesurée est une température interne du débitmètre, mesurée par un capteur de température placé à l'intérieur d'un boîtier du débitmètre, par exemple le capteur de température étant placé sur une carte de circuit imprimé à l'intérieur du boîtier du débitmètre ; de préférence, les débitmètres sont conçus pour transmettre la température mesurée, représentée sous forme de données dans des paquets de données sans fil, conjointement avec des données représentant une quantité de débit de fluide mesuré.

19. Système selon l'une quelconque des revendications 13-18, dans lequel la base de données de températures du serveur inclut en outre des données météorologiques de température fournies par un fournisseur météorologique tiers de données météorologiques, et dans lequel l'unité d'analyse de données est conçue pour analyser les températures de la pluralité de débitmètres issues de la période sans gel, conjointement avec les données météorologiques de température.
